# EUROPÄISCHE PATENTSCHRIFT

(11) **EP 0 434 969 B1**
(45) Veröffentlichungstag und Bekanntmachung des Hinweises auf die Patenterteilung: **23.02.1994**
(21) Anmeldenummer: 90122129.1
(22) Anmeldetag: 20.11.1990
(51) Int. Cl.: F02M 69/06, F02D 41/34, F02D 41/36

(54) **Zentraleinspritzsystem für eine Brennkraftmaschine**
Central injection system for internal combustion engines
Système d'injection centrale pour moteurs à combustion interne

(30) Priorität: 20.12.1989 DE 3942089
(43) Veröffentlichungstag der Anmeldung: 03.07.1991
(73) Patentinhaber: ROBERT BOSCH GMBH, 70442 Stuttgart (DE)
(72) Erfinder: Schnaibel, Eberhard, Dipl.-Ing., W-7254 Hemmingen (DE); Westerdorf, Michael, Dr. Dipl.-Ing., W-7141 Möglingen (DE); Abidin, Anwar, Dr. Dipl.-Ing., W-7250 Leonberg (DE)

(56) Entgegenhaltungen:
- EP-A- 0 069 360
- EP-A- 0 139 175
- EP-A- 0 204 923
- EP-A- 0 300 260
- US-A- 4 200 063
- PATENT ABSTRACTS OF JAPAN vol. 9, no. 73 (M-368)(1796) 03 April 1985, & JP-A-59 203841 (TOYOTA JIDOSHA KABUSHIKI KAISHA) 19 November 1984
- PATENT ABSTRACTS OF JAPAN vol. 8, no. 124 (M-301)(1561) 09 Juni 1984, & JP-A-59 28034 (TOYOTA JIDOSHA KOGYO K.K.) 14 Februar 1984

## Beschreibung

### Stand der Technik

Die Erfindung geht aus von einem Zentraleinspritzsystem für eine Brennkraftmaschine mit einer Kraftstoffzumeßstelle für wenigstens zwei Zylinder, Sensoren für einzelne Betriebskenngrößen der Brennkraftmaschine sowie einem elektronischen Steuergerät zur Verarbeitung der Betriebskenngrößen und Ausgabe eines Zumeßsignals nach den Gattungen der beiden Hauptansprüche.

Die DE-PS 29 29 516 offenbart eine "Elektrisch gesteuerte Kraftstoffeinspritzeinrichtung für eine Mehrzylinder-Brennkraftmaschine mit nur einem einzigen Kraftstoffeinspritzventil für alle Zylinder". In der Beschreibungseinleitung dieser DE-PS '516 werden weitere bekannte Systeme mit Zentraleinspritzung vorgestellt, bei denen die Zuführung des Kraftstoffs synchron mit dem Betrieb der einzelnen Zylinder erfolgt (Spalte 2, Zeile 37). Gegenstand der DE-PS 29 29 516 ist eine Weiterentwicklung derart, daß die einzelnen Einspritzzeitpunkte aufeinanderfolgender Einspritzungen unabhängig voneinander liegen können.

Bei einem in Serie befindlichen Zentraleinspritzsystem für das Fahrzeug Opel-Corsa 1,3 i werden die einzelnen Einspritzimpulse bei größeren Einspritzzeiten synchron zur Zündung ausgelöst, bei kleinen Einspritzzeiten jedoch asynchron zur Zündung. Die jeweilige Einspritzzeit bleibt dann konstant und eine Mengenvariation erfolgt durch eine Steuerung der Häufigkeit der Einspritzimpulse. Diese Maßnahme dient dazu, die Zumessung kleiner Kraftstoffmengen pro Zylinderfüllung sicherer zu beherrschen, weil die Linearität zuzumessender Kraftstoffmengen dann nicht mehr gewährleistet ist, wenn die Einspritzzeiten derart kleine Werte annehmen, daß Öffnungsphasen und Schließphasen der Einspritzventile im Vergleich zur Offenzeit nicht mehr vernachlässigbar sind.

Eine zur Zündung asynchrone Kraftstoffzumessung ist auch aus anderen Dokumenten bekannt, beispielsweise der DE-PS 30 15 623. Dort wird der Luftdurchsatz im Ansaugrohr mittels eines sogenannten Vortex-Luftmengenmessers erfaßt, der auftretende Turbulenzen (Karmansche Wirbel) an einem Hindernis meßtechnisch auswertet, und diese Turbulenzen bzw. Wirbel dienen dann als Triggerimpulse für die Kraftstoffzumessung.

Die US-PS 4 276 863 offenbart einen "Apparatus for controlling the number of enabled cylinders of an internal combustion engine during deceleration" und betrifft somit auch eine Einspritzfrequenzumschaltung bei einem kleineren Leistungsbedarf.

Schließlich zeigt die US-PS 4 091 773 einen "Frequency modulated single point fuel injection circuit with duty cycle modulation". Dabei wird ein drehzahl- und ansaugdruckabhängiges Signal einem "voltage controlled oscillator" (VCO) zugeführt, dessen Ausgangssignale wiederum die Einspritzfrequenz bestimmen. Während des Startfalles wird im übrigen ein spezieller Signalgenerator aktiviert, weil während dieses Betriebszustandes der last- und drehzahlabhängig gesteuerte VCO noch nicht zuverlässig genug arbeitet.

Die EP-A 204 923 lehrt auf Seite 2, 3. Absatz, einen Übergang auf eine asynchrone Einspritzung bei Einspritzzeiten unterhalb eines Minimalwertes, wobei sich die Frequenz nicht an einem festen Wert orientiert, sondern an Werten für ein sicheres Öffnen und Schließen des Ventils (minimum opening time and minimum rest time).

Es hat sich nun herausgestellt, daß die einzelnen bekannten Systeme noch nicht in allen Betriebszuständen zufriedenstellend arbeiten.

Aufgabe der Erfindung ist es deshalb, die bekannten Systeme weiterzuentwickeln und zu optimieren.

### Vorteile der Erfindung

Mit dem erfindungsgemäßen Zentraleinspritzsystem mit den Merkmalen von Anspruch 1 ist eine exakte Kraftstoffzumessung auch im Fall kleiner Kraftstoffmengen pro Ansaughub gewahrleistet. Dies wird dadurch erreicht, daß entweder im Bereich von kurzen Einspritzzeiten von einer an der Drehzahl bzw. Zündung orientierten variablen Einspritzfrequenz auf eine asynchrone Einspritzung mit konstanter Frequenz übergegangen wird und die Steuerung der Einspritzmenge über die Einspritzzeit erfolgt.

Weitere Vorteile der Erfindung ergeben sich aus dem Unteranspruch sowie der nachfolgenden Beschreibung von Ausführungsbeispielen.

### Zeichnung

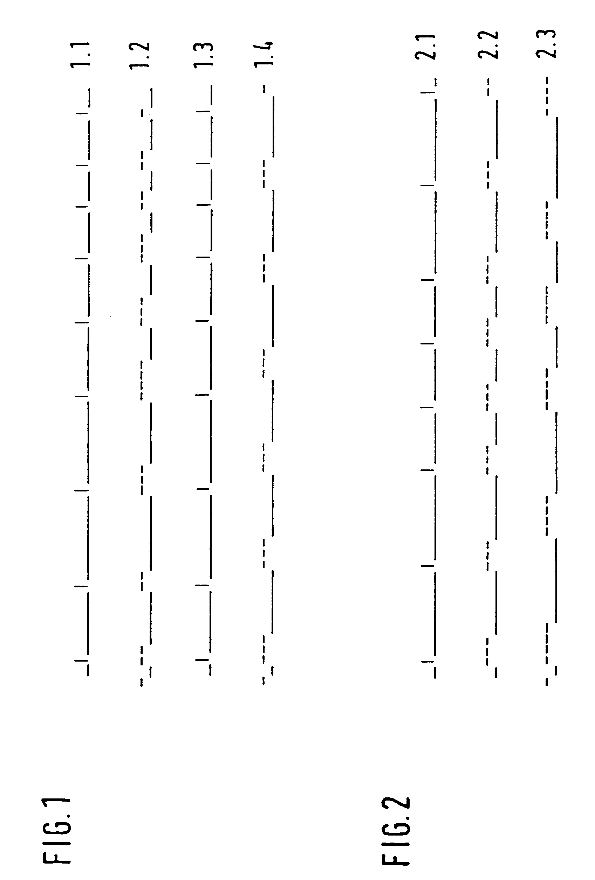

Ausführungsbeispiele der Erfindung sind in der Zeichnung dargestellt und werden im folgenden näher beschrieben und erläutert. Es zeigen Figur 1 Signalverläufe bei einer Anpassung der Einspritzzeit bei kleinen Einspritzzeiten durch Verringerung der Einspritzhäufigkeit und Übergang von der zündsynchronen Einspritzung auf eine Einspritzung mit fester Frequenz gemäß vorliegender Erfindung.

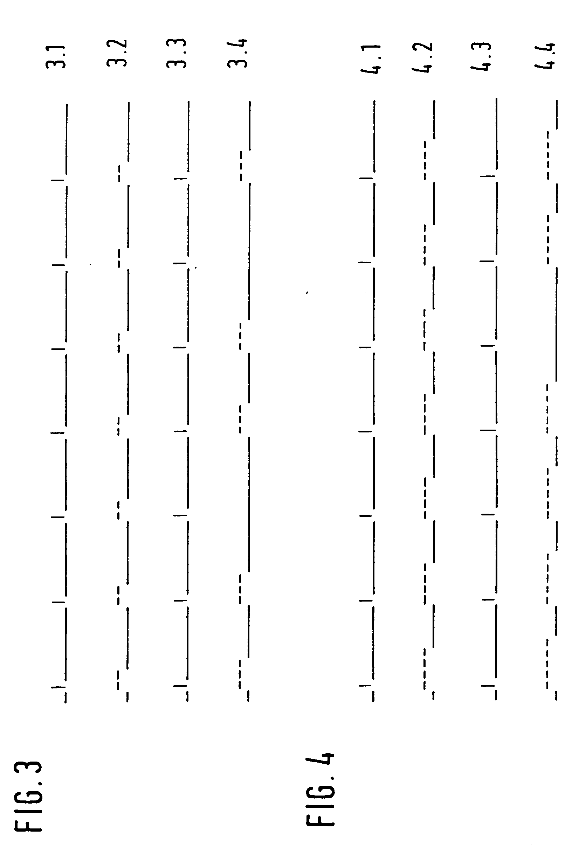

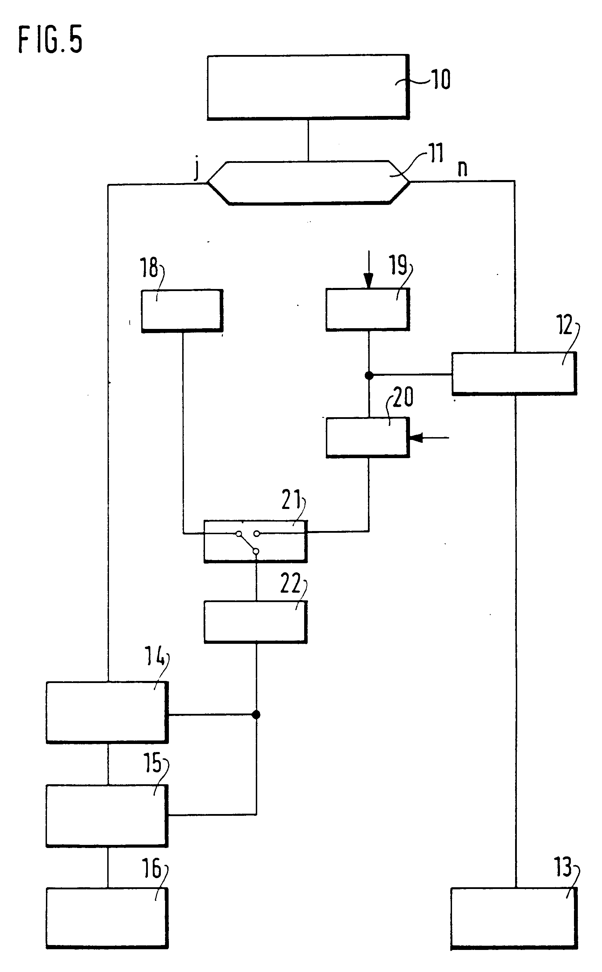

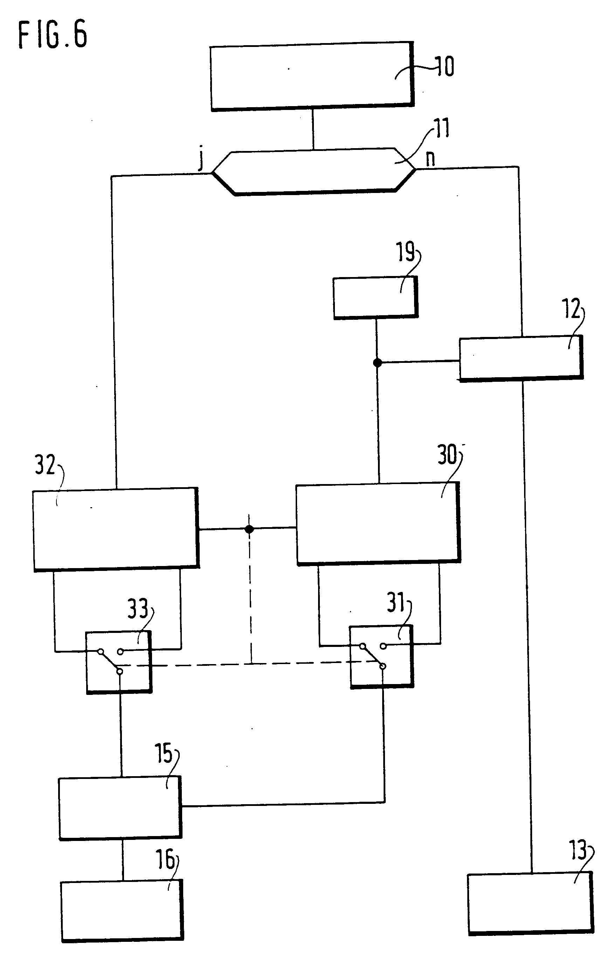

Figur 2 zeigt eine Anpassung mit einer Verlängerung der Einspritzperiode und der einzelnen Einspritzzeiten um einen bestimmten Prozentsatz, in Figur 3 und Figur 4 sind Impulsdiagramme mit Ausblendungen einzelner Einspritzsignale dargestellt, Figur 5 zeigt ein Diagramm zur Realisierung der in den Figuren 1 und 2 dargestellten Beispiele, und Figur 6 zeigt eine Realisierungsmöglichkeit für die aus den Figuren 3 und 4 bekannten Impulsbilder.

### Beschreibung der Ausführungsbeispiele

Die Beispiele betreffen Impulsdiagramme und Signalverarbeitung in Blockdiagrammen für ein Zentraleinspritzsystem für eine Brennkraftmaschine. In Figur 1 ist mit 1.1 ein sogenanntes TD-Signal dargestellt, dessen Auftreten jeweils den oberen Totpunkt (Top-Dead-Center) eines einzelnen Zylinders markiert.

Das Diagramm 1.2 zeigt Einspritzungen im Normalfall. Dabei wird deutlich, daß die Einspritzsignale jeweils mit dem TD-Signal nach 1.1 getriggert werden und insbesondere bei höheren Drehzahlen dann Situationen auftreten können, bei denen die Impulspausen des Einspritzsignals gegenüber den Impulsdauern ein derartiges Verhältnis annehmen, daß eine korrekte Kraftstoffzumessung nicht mehr gewährleistet ist.

Der Impulszug nach Figur 1.3 entspricht demjenigen von 1.1. Im Diagramm 1.4 ist dann die Situation dargestellt, daß die Einspritzung mit konstanter Frequenz und somit nicht mehr zündsynchron erfolgt, gleichzeitig jedoch einzelne Einspritzzeiten verlängert sind zur besseren Beherrschbarkeit der zugemessenen Einspritzmenge.

Figur 2 zeigt die Verhältnisse bei einer Verlängerung von Einspritzperiode und Einspritzzeit um jeweils etwa 33 %. Dabei ist aus 2.1 wieder eine Folge von TD-Signalen ersichtlich, Figur 2.2 zeigt normalerweise vorgesehene zündsynchrone Einspritzungen, und 2.3 die Verhältnisse bei einer Verlängerung von Einspritzperiode und Einspritzzeit um etwa 33 %. Als zweckmäßig haben sich Verlängerungen zwischen 20 % und 60 % herausgestellt. Gegenüber einer festen Einspritzfrequenz bietet die Verlängerung von Einspritzperiode und Einspritzzeit folgende Vorteile:
a) einfachere Berechnung
b) sichere Vermeidung von niederen Schwebungsfrequenzen.

Bei beiden in den Figuren 1 und 2 dargestellten Fällen ist natürlich sicherzustellen, daß insgesamt gesehen der zugemessene Kraftstoff dem last- und drehzahlabhängigen Kraftstoffbedarf entspricht, somit lediglich in Einspritzfrequenz und Dauer der einzelnen Einspritzimpulse eingegriffen wird, nicht jedoch in die Bestimmung des eigentlichen Kraftstoffbedarfs.

Figur 3 zeigt die Verhältnisse von TD-Signal (3.1 und 3.3) und zündsynchroner Einspritzung (3.2) sowie einem geänderten Einspritzmodus nach 3.4, wobei die einzelne Einspritzzeit um 50 % verlängert ist, jede dritte Einspritzung jedoch ausgesetzt wird.

Figur 4 zeigt die entsprechenden Verhältnisse (4.1, 4.2, 4.3) in Verbindung mit einer Verlängerung der Einspritzzeit um 25 % und einem Aussetzen der Einspritzung bei jedem fünften TD-Signal.

Realisierbar sind die Kurvenverläufe nach Figur 1.4, 2.3, 3.4 und 4.4 mittels Schaltungsanordnungen bzw. Programmierungen entsprechend den Blockdarstellungen der Figuren 5 und 6. Figur 5 zeigt in Blockdarstellung die Signalverarbeitung bezüglich Ausgabe von Einspritzzeiten bei einem Zentraleinspritzsystem. Dabei markiert Block 10 die Berechnung des Einspritzmengenbedarfs QK. In einem nachfolgenden Block 11 wird abgeschätzt, ob bei einer zündsynchronen Einspritzung die Einspritzdauer A bei der erforderlichen zuzumessenden Kraftstoffmenge kleiner als 2 Millisekunden sein würde. Im Falle "nein" folgt ein Triggerblock 12 und die nachfolgende Ausgabe einer zündsynchronen Einspritzung TISYN in Block 13. Ergibt die Anfrage in Block 11 "ja", folgt mit Block 14 eine Neuaufteilung der ermittelten Kraftstoffmenge QK entsprechend der zu ändernden Häufigkeit der Einspritzungen, nachfolgend in Block 15 eine entsprechende Triggerung und schließlich mit 16 die Ausgabe der asynchronen Einspritzung (TIASYN).

Mit 18 ist ein Frequenzgenerator zur Abgabe einer festen Frequenz fo bezeichnet. 19 markiert eine Signalerzeugung entsprechend den TD-Signalen z. B. nach Figur 1.1. Demnach ist das Ausgangssignal des Blocks 19 synchron zur Zündung. Es gelangt zum Triggerblock 12 und damit zur Auslösung der zündsynchronen Ausgabe der Einspritzung nach Block 13.

Desweiteren steht Block 19 ausgangsseitig mit einem Block 20 in Verbindung, der die Funktion eines (steuerbaren) Frequenzteilers besitzt. Es folgt eine Umschalteinrichtung 21, der eingangsseitig die Ausgangssignale der Blöcke 18 und 20 zuführbar sind und die ausgangsseitig in einem nachfolgenden Block 22 ein Triggersignal bereitstellt, das im Block 14 eine entsprechende Aufteilung der erforderlichen Einspritzmenge auf einzelne Einspritzimpulse ermöglicht und schließlich das Triggersignal für den Block 15 bereitstellt.

Die Schalteinrichtung 21 von Figur 5 markiert die beiden Alternativen nach den Figuren 1.4 und 2.3, wobei einmal eine feste Einspritzfrequenz entsprechend dem Ausgangssignal des Frequenzgenerators 18 verwendet wird und zum anderen eine z. B. um 33 % erhöhte Einspritzperiode (Figur 2.3) gegenüber dem TD-Signal nach Figur 2.1, die mittels des Frequenzteilers 20 erreichbar ist. Dabei soll das Teilungsverhältnis n über einen speziellen Steuereingang in Block 20 steuerbar sein und jegliche für den Einzelfall zweckmäßige Werte annehmen können.

Die Realisierung des Kurvenverlaufs nach Figur 1.4 beim Gegenstand von Figur 5 mit der gezeichneten Stellung der Schalteinrichtung 21 erfolgt nun derart, daß bei Unterschreiten des Grenzwerts A (Block 11) nach dem nächsten Zündimpuls die Einspritzzeiten für eine feste Frequenz von beispielsweise 25 Hz = 750 U/min in Block 14 berechnet werden. Die Einspritzung erfolgt dann je nach Laufzeit des Hauptprogramms beispielsweise bei jedem vierten Durchlauf, d. h. alle 40 Millisekunden. Auf diese Weise werden bei einer Nenndrehzahl von beispielsweise 900 U/min die Einspritzzeiten um 20 % verlängert. Als zweckmäßig haben sich bezüglich der festen Frequenzen des Frequenzgenerators 18 von Figur 5 die Werte 15 - 25 Hz erwiesen.

Beim Gegenstand nach Figur 2.3 in Verbindung mit der Signalverarbeitung von Figur 5 mit geänderter Schaltstellung in der Schalteinrichtung 21 wird bei Unterschreiten des Grenzwerts (Block 11) die drehzahlabhängige Grundeinspritzzeit in Block 14 um einen applizierbaren Faktor verlängert. Damit insgesamt dieselbe Menge eingespritzt wird, muß auch die Periodendauer der Einspritzung entsprechend verlängert werden. Dies geschieht, indem die Periodendauer der Zündimpulse mit dem entsprechenden Faktor verlängert wird, was mittels des Teilerverhältnisses n in Block 20 symbolisch dargestellt ist. Von dieser Periodendauer wird die tatsächlich Einspritzzeit abgezogen, die verbleibende Zeit ist die Pause zwischen den Einspritzimpulsen. Nach Ablauf der Einspritzzeit wird dann ein für die Steuerung der Einspritzzeit verwendeter Timer mit der Pausenzeit geladen und neu gestartet. Nach Ablauf der Pause wird dann automatisch die nächste Einspritzzeit ausgegeben. In einer Pause kann bei Vorliegen einer genügend großen Einspritzzeit (Abfrage in Block 11) wieder auf eine TD-synchrone Einspritzung entsprechend Figur 2.2 umgeschaltet werden.

Figur 6 zeigt in grober Blockdarstellung eine Realisierungsmöglichkeit für die Signalverläufe nach Figur 3.4 und 4.4. Dabei sind die bereits aus Figur 5 bekannten Blöcke mit den gleichen Bezugsziffern versehen. Hauptelement beim Gegenstand von Figur 6 ist ein Block 30 einer Aussetzersteuerung, die es entsprechend den Darstellungen von Figur 3.4 und 4.4 ermöglicht, jedoch dritten bzw. fünften TD-Impuls vom TD-Signalgeber 19 auszublenden. Erreichbar ist dies mittels Zählvorgängen derart, daß beispielsweise die einzelnen TD-Signale gezählt werden, und jeder dritte bzw. fünfte Impuls die Weitergabe des TD-Signals als Triggerimpuls sperrt. Die Angaben 2 zu 3 bzw. 4 zu 5 in Block 30 mit dem nachfolgenden Umschalter 31 symbolisieren die Weiterleitung von 2 von 3 Impulsen bzw. 4 von 5 Impulsen mit einer entsprechenden Wahlmöglichkeit mittels des Schalters 31.

Das Aussetzen einzelner Einspritzungen erfordert zwangsläufig eine Verlängerung der verbleibenden Einspritzungen. Dies wird in Block 32 erreicht, in dem jeweils der vorgesehene Einspritzimpuls auf 150 % bzw. 125 % erhöht und mittels der nachfolgenden Umschalteinrichtung 33 die entsprechende Impulsweite in Abstimmung mit der Stellung des Schalters 31 gewählt wird. Ausgangsseitig steht dieser Schalter 31 mit Block 15 in Verbindung, der schließlich die Ausgabe eines Einspritzsignals mit Aussetzern (TIAUSS) ermöglicht.

Im Falle eines Aussetzens eines jeden dritten Einspritzsignals entsprechend Figur 3.4 werden die ausgegebenen Werte um 50 %, d. h. auf insgesamte 150 % des Grundwertes angehoben. Auf diese Weise wird dann insgesamt dieselbe Menge eingespritzt. Dieser Vorgang kann nur nach einem ausgefallenen Einspritzimpuls beendet werden, damit insgesamt gesehen keine erhöhte Kraftstoffmenge eingespritzt wird.

Wesentlich ist, daß eine ermittelte Kraftstoffmenge pro Zündung sicher bereitgestellt wird.

Mit den vorstehend beschriebenen Ausführungsbeispielen ist es somit möglich, in Grenzbereichen für die Einspritzventile, in denen sich die eingespritzte Kraftstoffmenge nicht mehr exakt bestimmen läßt, auf eine andere Einspritzart überzugehen mit dem Ziel, die Mengensteuerung sicher zu beherrschen.

## Patentansprüche

1. Zentraleinspritzsystem für eine Brennkraftmaschine mit einer Kraftstoffzumeßstelle für wenigstens zwei Zylinder, Sensoren für einzelne Betriebskenngrößen der Brennkraftmaschine, einem elektronischen Steuergerät zur Verarbeitung der Betriebskenngrößen und Ausgabe eines Zumeßsignals an ein elektromagnetisch betätigbares Einspritzventil an der einen Zumeßstelle, wobei die zugemessene Kraftstoffmenge steuerbar ist über Einspritzfrequenz und Einspritzzeit und abhängig von Betriebskenngrößen (11) eine Änderung der Einspritzfrequenz vorgesehen ist, derart, daß im Bereich von kurzen Einspritzzeiten (11) von einer an der Drehzahl bzw. Zündung orientierten variablen Einspritzfrequenz (19, 12) auf eine asynchrone Einspritzung übergegangen wird,
dadurch gekennzeichnet, daß auf eine Einspritzung mit konstanter Frequenz (18) übergegangen wird und die berechnete Einspritzmenge (10) entsprechend der sich geänderten Häufigkeit der Einspritzungen aufgeteilt wird (14).

2. Zentraleinspritzsystem nach Anspruch 1, dadurch gekennzeichnet, daß die konstante Frequenz bei etwa 15 - 25 Hz liegt.

## Claims

1. Central injection system for an internal combustion engine with a fuel metering station for at least two cylinders, sensors for individual operating parameters of the internal combustion engine, an electronic control unit for the processing of the operating parameters and the output of a metering signal to an electromagnetically actuable injection valve on the one metering station, the metered fuel quantity being controllable by means of injection frequency and injection time and a change to the injection frequency being provided as a function of operating parameters (11) in such a way that, in the range of short injection times (11), there is a transition from a variable injection frequency (19, 12) based on the rotational speed or ignition to an asynchronous injection, characterised in that there is a transition to an injection with constant frequency (18) and the calculated injection quantity (10) is distributed (14) in accordance with the changed frequency of the injections.

2. Central injection system according to Claim 1, characterised in that the constant frequency is approximately 15-25 Hz.

## Revendications

1. Système central d'injection pour un moteur à combustion interne avec un point de dosage de carburant pour au moins deux cylindres, des détecteurs pour différentes grandeurs caractéristiques du fonctionnement du moteur à combustion interne, avec un appareil électronique de commande pour le traitement des grandeurs caractéristiques de fonctionnement et l'émission d'un signal de dosage à une soupape d'injection susceptible d'être actionnée électromagnétiquement en l'un des points de dosage, tandis que la quantité de carburant dosée est susceptible d'être commandée par l'intermédiaire de la fréquence d'injection et du temps d'injection et qu'en fonction de grandeurs caractéristiques du fonctionnement (11) une modification de la fréquence d'injection est prévue, de sorte que dans la zone des temps d'injection courts (11) on passe d'une fréquence d'injection variable (19, 12) orientée sur la vitesse de rotation ou bien l'allumage, à une injection asynchrone, système caractérisé en ce qu'on passe sur une injection à fréquence constante (18) et la quantité d'injection calculée (10) est répartie de façon correspondante à la fréquence se modifiant des injections (14).

2. Système central d'injection selon la revendication 1, caractérisé en ce que la fréquence constante se situe à à peu près 15 à 25 Hz.
